# EUROPEAN PATENT SPECIFICATION

(11) **EP 3 876 644 B1**
(45) Date of publication and mention of the grant of the patent: **25.02.2026**
(21) Application number: 19878611.3
(22) Date of filing: 01.11.2019
(51) Int. Cl.: H04L 5/00, H04W 72/23

(54) **METHODS AND DEVICES FOR SENDING AND RECEIVING MESSAGES, AND STORAGE MEDIUM**
VERFAHREN UND VORRICHTUNGEN ZUM SENDEN UND EMPFANGEN VON NACHRICHTEN SOWIE SPEICHERMEDIUM
PROCÉDÉS ET DISPOSITIFS D'ENVOI ET DE RÉCEPTION DE MESSAGES, ET SUPPORT D'INFORMATIONS

(30) Priority: 01.11.2018 CN 201811297226
(43) Date of publication of application: 08.09.2021
(73) Proprietor: ZTE Corporation, Shenzhen Guangdong 518057 (CN)
(72) Inventor: FANG, Huiying, Shenzhen, Guangdong 518057 (CN); DAI, Bo, Shenzhen, Guangdong 518057 (CN)
(74) Representative: Regimbeau
(86) International application number: PCT/CN2019/114973
(87) International publication number: WO 2020/088638

(56) References cited:
- WO-A1-2018/064128
- CN-A- 103 391 583
- CATT: "Remaining details of pre-emption indication", vol. RAN WG1, no. Prague, Czechia; 20171009 - 20171013, 8 October 2017 (2017-10-08), XP051341023, Retrieved from the Internet <URL:http://www.3gpp.org/ftp/Meetings_3GPP_SYNC/RAN1/Docs/> [retrieved on 20171008]
- SAMSUNG: "Indication of Preempted Resources", vol. RAN WG1, no. Hangzhou, China; 20170515 - 20170519, 6 May 2017 (2017-05-06), XP051262212, Retrieved from the Internet <URL:http://www.3gpp.org/ftp/tsg_ran/WG1_RL1/TSGR1_89/Docs/> [retrieved on 20170506]
- QUALCOMM INCORPORATED: "URLLC DL pre-emption and UL suspension indication channel design", vol. RAN WG1, no. Nagoya, Japan; 20170918 - 20170921, 17 September 2017 (2017-09-17), XP051339889, Retrieved from the Internet <URL:http://www.3gpp.org/ftp/Meetings_3GPP_SYNC/RAN1/Docs/> [retrieved on 20170917]
- SEQUANS COMMUNICATIONS: "Preemption-based multiplexing of URLLC and eMBB in DL", vol. RAN WG1, no. Athens, Greece; 20170213 - 20170217, 12 February 2017 (2017-02-12), XP051209277, Retrieved from the Internet <URL:http://www.3gpp.org/ftp/Meetings_3GPP_SYNC/RAN1/Docs/> [retrieved on 20170212]
- NEC: "UL inter UE Tx prioritization/multiplexing of eMBB and URLLC", vol. RAN WG1, no. Gothenburg, Sweden; 20180820 - 20180824, 10 August 2018 (2018-08-10), XP051515942, Retrieved from the Internet <URL:http://www.3gpp.org/ftp/tsg%5Fran/WG1%5FRL1/TSGR1%5F94/Docs/R1%2D1808565%2Ezip> [retrieved on 20180810]
- SAMSUNG: "Indication of Preempted Resources", 3GPP DRAFT; R1-1708036, 19 May 2017 (2017-05-19), Hangzhou, China, pages 1 - 4, XP051262212
- HUAWEI ET AL: "On Pre-Emption Indication for DL Multiplexing of URLLC and eMBB", 3GPP DRAFT; R1-1708124, 19 May 2017 (2017-05-19), Hangzhou, China, pages 1 - 9, XP051262259
- SAMSUNG: "Indication of Preempted Resources in DL", 3GPP DRAFT; R1-1710732, 30 June 2017 (2017-06-30), Qingdao, P.R. China, pages 1 - 3, XP051304361

## Description

### TECHNICAL FIELD

The present invention relates to the field of communications and, in particular, to a method and an apparatus for sending and receiving messages, and a storage medium.

### BACKGROUND

Machine Type Communications (MTC) and Narrowband-Internet of Things (NB-IoT) are the primary application mode of the Internet of Things in the current stage. An MTC terminal and an NB-IoT terminal are designed to have a service life of at least 5 to 10 years. The MTC terminal operates in a system based on Long Term Evolution (LTE)/(Long Term Evolution-Advanced (LTE-A), and the system is commonly referred to as an LTE-MTC system. An NB-IoT system has three deployment modes: a standalone deployment, a guard band deployment and an in-band deployment, where the guard band deployment and the in-band deployment operate in LTE. With the gradual withdrawal of traditional LTE terminals from the market, the spectrum occupied by the LTE system will be gradually upgraded to a new radio access (NR) system, and the upgraded system needs to coexist with the LTE-MTC system and the NB-IoT system for a long time.

When the LTE-MTC system or the NB-IoT system coexists with the NR system, if the LTE-MTC/NB-IoT and the NR systems share a same frequency region, due to a low delay requirement of a ultra-reliable low latency communication (URLLC) service in the NR system, a burst URLLC may occupy resources (sending URLLC data and knocking out sending of LTE-MTC/NB-IoT data at a corresponding position) of LTE-MTC/NB-IoT users, but LTE-MTC or NB-IoT users do not know that this part of resources is temporarily occupied by URLLC users. At this time, the transmission performance of LTE-MTC users or NB-IoT users will be affected.

In the related art, the LTE-MTC terminal or the NB-IoT terminal does not know that resources of the LTE-MTC terminal or resources of the NB-IoT terminal are occupied by other services, thus causing the data transmission performance to be affected, and no effective solution has been provided.

WO 2018/064128 A1 discloses methods, systems, and apparatuses for receiving a first type of transmission and a second type of transmission. A Wireless Transmit Receive Unit (WTRU) may receive a first downlink control information (DCI) during a first downlink (DL) transmission interval allocating first radio resources in the first DL transmission interval for reception of a first type of transmission. The WTRU may receive data from the first type of transmission in the first radio resources.

### SUMMARY

The invention is set out in the appended set of Claims.

### BRIEF DESCRIPTION OF DRAWINGS

FIG. 1 is a flowchart of a method for sending a message according to an embodiment of the present invention;
FIG. 2 is a structural block diagram of a message sending apparatus according to an embodiment of the present invention;
FIG. 3 is a flowchart of a method for receiving a message according to an embodiment of the present invention;
FIG. 4 is a structural block diagram of a message receiving apparatus according to an embodiment of the present invention;
FIG. 5 is a schematic diagram of information indicating data transmission of a previous moment or a previous time period in current downlink control information according to an optional embodiment of the present invention;
FIG. 6 is a schematic diagram of coexistence of an LTE-MTC system and an NR system, an URLLC service of an NR preempting LTE-MTC resources and indication of interference information according to an optional embodiment of the present invention;
FIG. 7 is a schematic diagram of coexistence of an NB-IoT system and an NR system, an URLLC service of an NR preempting NB-IoT resources and indication of interference information according to an optional embodiment of the present invention; and
FIG. 8 is a schematic diagram of coexistence of an LTE-MTC system and an NR system, an URLLC service of an NR preempting NB-IoT resources and indication of interference information according to an optional embodiment of the present invention.

### DETAILED DESCRIPTION

The present invention will be hereinafter described in detail with reference to drawings in conjunction with embodiments. It is to be noted that if not in collision, the embodiments and features therein in the present application may be combined with each other.

It is to be noted that the terms "first", "second" and the like in the description, claims and the preceding drawings of the present invention are used to distinguish between similar objects but not necessarily used to describe a particular order or sequence.

### Embodiment one

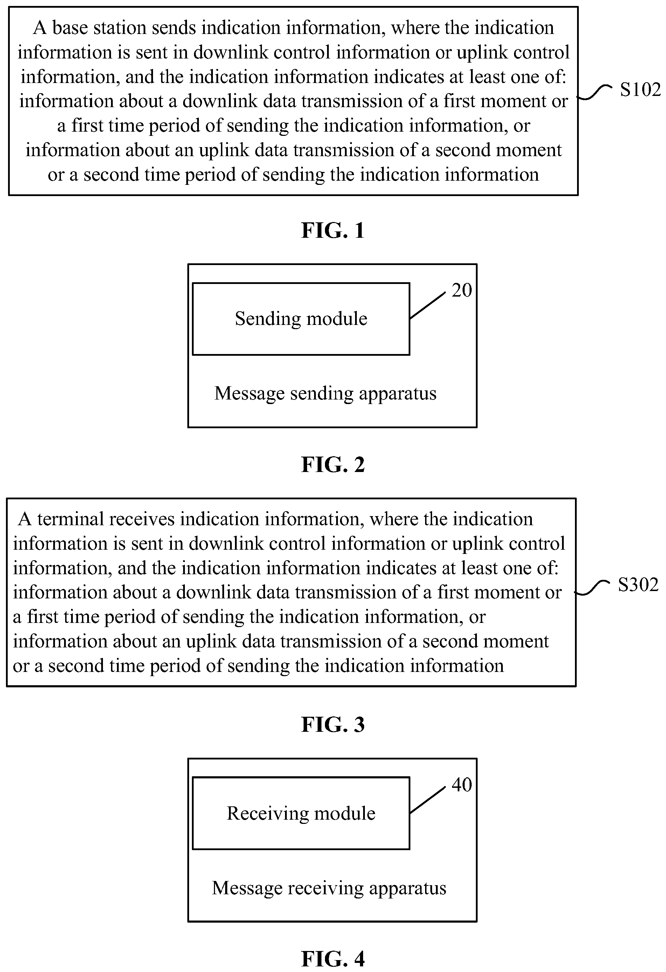

An embodiment of the present invention provides a method for sending a message. FIG. 1 is a flowchart of a method for sending a message according to an embodiment of the present invention. As shown in FIG. 1, the process of the method includes the following steps.

In step S102, a base station sends indication information, where the indication information is sent in downlink control information or uplink control information, and the indication information indicates at least one of: information about a downlink data transmission of a first moment or a first time period of sending the indication information, or information about an uplink data transmission of a second moment or a second time period of sending the indication information.

According to the above step, the base station sends information capable of indicating a downlink data transmission of the first moment or the first time period of the indication information, and/or sending information about the uplink data transmission of the second moment or the second time period of the indication information. By using the solution, the terminal can acquire the information about the downlink data transmission of the first moment or the first time period, and/or the information about the uplink data transmission of the second moment or the second time period, so that the LTE-MTC terminal or the NB-IoT terminal can know whether its own resources are occupied by other services, and the transmission performance of LTE-MTC/NB-IoT users can be improved.

In the embodiment of the present invention, the uplink control information includes dedicated uplink control information, and the downlink control information includes at least one of: downlink control information for scheduling a traffic channel, common downlink control information or dedicated downlink control information.

In the embodiment of the present invention, the downlink control information is sent in a current control channel, and the method further includes one of the following steps.

In a case where a start sending moment of the current control channel is moment n, a preceding moment is a moment n-k.

In a case where a start sending subframe of the current control channel is a subframe n, the preceding moment is a subframe n-k.

In a case where a start moment of the current control channel is a moment n, the preceding time period is a time period starting from a moment n-k and having a length of m.

In a case where a start subframe of the current control channel is a subframe n, the preceding time period is a time period starting from a subframe n-k and having a length of m subframes. k and m are positive integers.

In the embodiment of the present invention, when the indication information indicates information about the downlink data transmission, the indication information includes at least one of downlink data interference information, downlink data muting information, downlink data drop information, downlink data puncture information, indication information of downlink data merging, indication information of a downlink data decoding manner, indication information of a downlink data mapping manner or indication information of a downlink data transmission resource.

The indication information of the data mapping manner refers to a newly data mapping manner temporarily adjusted by the base station according to an interference condition of a data sending resource when data is actually sent.

The indication information of the data transmission resource refers to a resource size or range information of data transmission in the preceding moment or the preceding time period, and which data resources may be specifically included.

In the embodiment of the present invention, the method further includes the following step. When the downlink control information is downlink control information scheduled for a retransmission data packet, the base station determines the indication information according to data in a previous transmission or data transmission in a first transmission.

In the embodiment of the present invention, the method further includes the following. When the indication information indicates the information about the uplink data transmission, the indication information includes at least one of uplink data channel interference information, uplink data channel muting information, uplink data channel drop information, uplink data channel puncture information, indication information of an uplink data channel mapping manner, uplink data channel delay sending information or indication information of an uplink data channel transmission resource.

In the embodiment of the present invention, the indication information further includes one of the following information: a start position at which a data channel is interfered, a start position at which a data channel is muted or dropped or punched, a length of interference to a data channel, a length in which a data channel is muted or dropped or punched, delay transmission information of a data channel, newly added transmission resource information of a data channel or retransmission information of a data channel.

It is to be noted that an uplink data channel includes one of an uplink data channel being sent by the terminal, or an uplink data channel scheduled by the base station but not started to be sent by the terminal.

For the uplink data channel being sent, the terminal performs puncture, muting or drop processing on the uplink data channel being sent according to the received indication information.

For the uplink data channel scheduled but not started to be sent by the terminal, the terminal performs puncture, muting, drop or remapping processing on the uplink data channel according to the received indication information, or readjusts a processing of a sending position according to the transmission resource indicated by the indication information.

In the embodiment of the present invention, the start position is an interfered start position or a relative value between a start position at which a data channel is muted (or dropped or punched) and a sending end position of uplink control information for sending the indication information. In a case where sending of the uplink control information for sending the control information ends in a subframe n and the start position in the control information is a subframe k, the indicated interfered start position or the start position at which the uplink data channel is muted (or dropped or punched) is a subframe n+k.

The first moment includes a preceding moment of sending the indication information, the first time period includes a preceding time period of sending the indication information, the second moment includes a subsequent moment of sending the indication information, and the second time period includes a subsequent time period of sending the indication information.

From the description of the embodiments described above, it may be understood clearly by those skilled in the art that the method of any embodiment described above may be implemented by means of software plus a general-purpose hardware platform, or may be implemented by hardware. Based on this understanding, the solution provided by the present invention may be embodied in the form of a computer software product. The computer software product is stored in a storage medium (such as a ROM/RAM, a magnetic disk or an optical disk) and includes multiple instructions for enabling a terminal device (which may be a mobile phone, a computer, a server, a network device, or the like) to execute the method according to multiple embodiments of the present invention.

### Embodiment two

This embodiment further provides a message sending apparatus. The apparatus is configured to implement the above-mentioned embodiments and optional embodiments. What has been described will not be repeated. As used below, the term "module" may be software, hardware or a combination of software and hardware capable of implementing predetermined functions. The apparatus described below in the embodiment may be implemented by software, but implementation by hardware or by a combination of software and hardware is also possible and conceived.

FIG. 2 is a structural block diagram of a message sending apparatus according to an embodiment of the present invention. As shown in FIG. 2, the apparatus includes a sending module 20.

The sending module 20 is configured to send indication information; where the indication information is sent in downlink control information or uplink control information, and the indication information indicates at least one of: information about a downlink data transmission of a first moment or a first time period of sending the indication information, or information about an uplink data transmission of a second moment or a second time period of sending the indication information.

According to the above sending module 20, the base station sends information capable of indicating a downlink data transmission of the first moment or the first time period of the indication information, and/or sending information about an uplink data transmission of the second moment or the second time period of the indication information. By using the solution, the terminal can acquire the information about the downlink data transmission of the first moment or the first time period, and/or the information about the uplink data transmission of the second moment or the second time period, so that the LTE-MTC terminal or the NB-IoT terminal can know whether its own resources are occupied by other services, and the transmission performance of LTE-MTC/NB-IoT users can be improved.

In the embodiment of the present invention, the uplink control information includes dedicated uplink control information, and the downlink control information includes at least one of: downlink control information for scheduling a traffic channel, common downlink control information or dedicated downlink control information.

In the embodiment of the present invention, the downlink control information is sent in a current control channel, and the method further includes one of the following steps.

In a case where a start sending moment of the current control channel is moment n, a preceding moment is a moment n-k.

In a case where a start sending subframe of the current control channel is a subframe n, the preceding moment is a subframe n-k.

In a case where a start moment of the current control channel is a moment n, the preceding time period is a time period starting from a moment n-k and having a length of m.

In a case where a start subframe of the current control channel is a subframe n, the preceding time period is a time period starting from a subframe n-k and having a length of m subframes. k and m are positive integers.

In the embodiment of the present invention, when the indication information indicates information about the downlink data transmission, the indication information includes at least one of downlink data interference information, downlink data muting information, downlink data drop information, downlink data puncture information, indication information of downlink data merging, indication information of a downlink data decoding manner, indication information of a downlink data mapping manner or indication information of a downlink data transmission resource.

The indication information of the data mapping manner refers to a newly data mapping manner temporarily adjusted by the base station according to an interference condition of a data sending resource when data is actually sent.

The indication information of the data transmission resource refers to a resource size or range information of data transmission in the preceding moment or the preceding time period, and which data resources may be specifically included.

In the embodiment of the present invention, the method further includes the following step. When the downlink control information is downlink control information scheduled for a retransmission data packet, the base station determines the indication information according to data in a previous transmission or data transmission in a first transmission.

In the embodiment of the present invention, the method further includes the following. When the indication information indicates the information about the uplink data transmission, the indication information includes at least one of uplink data channel interference information, uplink data channel muting information, uplink data channel drop information, uplink data channel puncture information, indication information of an uplink data channel mapping manner, uplink data channel delay sending information or indication information of an uplink data channel transmission resource.

In the embodiment of the present invention, the indication information further includes one of the following information: a start position at which a data channel is interfered, a start position at which a data channel is muted or dropped or punched, a length of interference to a data channel, a length in which a data channel is muted or dropped or punched, delay transmission information of a data channel, newly added transmission resource information of a data channel or retransmission information of a data channel.

It is to be noted that an uplink data channel includes one of an uplink data channel being sent by the terminal, or an uplink data channel scheduled by the base station but not started to be sent by the terminal.

For the uplink data channel being sent, the terminal performs puncture, muting or drop processing on the uplink data channel being sent according to the received indication information.

For the uplink data channel scheduled but not started to be sent by the terminal, the terminal performs puncture, muting, drop or remapping processing on the uplink data channel according to the received indication information, or readjusts a processing of a sending position according to the transmission resource indicated by the indication information.

In the embodiment of the present invention, the start position is an interfered start position or a relative value between a start position at which a data channel is muted (or dropped or punched) and a sending end position of uplink control information for sending the indication information. In a case where sending of the uplink control information for sending the control information ends in a subframe n and the start position in the control information is a subframe k, the indicated interfered start position or the start position at which the uplink data channel is muted (or dropped or punched) is a subframe n+k.

The first moment includes a preceding moment of sending the indication information, the first time period includes a preceding time period of sending the indication information, the second moment includes a subsequent moment of sending the indication information, and the second time period includes a subsequent time period of sending the indication information.

It is to be noted that each module described above may be implemented by software or hardware. Implementation by hardware may, but may not necessarily, be performed in the following manners: the various modules described above are located in the same processor, or each module described above is located in their respective processors in any combination form.

### Embodiment three

An embodiment of the present invention provides a method for receiving a message. FIG. 3 is a flowchart of a method for receiving a message according to an embodiment of the present invention. As shown in FIG. 3, the process of the method includes the following steps.

In step S302, a terminal receives indication information, where the indication information is sent in downlink control information or uplink control information.

The indication information indicates at least one of: information about a downlink data transmission of a first moment or a first time period of sending the indication information, or information about an uplink data transmission of a second moment or a second time period of sending the indication information.

According to the above step, the terminal receives the indication information, and knows the information about the downlink data transmission of the first moment or the first time period of sending the indication information, and/or the information about the uplink data transmission of the second moment or the second time period of sending the indication information through the indication information. By using the solution, the terminal can acquire the information about the downlink data transmission of the first moment or the first time period, and/or the information about the uplink data transmission of the second moment or the second time period, so that the LTE-MTC terminal or the NB-IoT terminal can know whether its own resources are occupied by other services, and the transmission performance of LTE-MTC/NB-IoT users can be improved.

In the embodiment of the present invention, the terminal receives the indication information sending the data transmission. After the indication information is sent in the downlink control information or the uplink control information, the method further includes a step described below.

The terminal determines a decoding strategy for a currently received data packet according to the indication information.

In the embodiment of the present invention, the decoding strategy includes one of merging the currently received data packet with a previous data packet, or merging the currently received data packet with data packets of a previous segment, and decoding a merged data packet; dropping a previous data packet or data packets of a previous segment, and decoding the currently received data packet; or merging the currently received data packet with part of a previous data packet, or merging the currently received data packet with part of data packets of a previous segment, and decoding a merged data packet.

In an embodiment of the present invention, after the terminal receives the indication information, the method further includes a step described below.

The terminal determines to change a manner of sending data at the second moment according to the indication information.

In the embodiment of the present invention, determining, by the terminal, according to the indication information, to change a manner of sending data at the second moment includes terminating data transmission on part of resources corresponding to the data sent at the second moment; or extending a sending duration of sending the data at the second moment.

In the embodiment of the present invention, the first moment includes a preceding moment of sending the indication information, the first time period includes a preceding time period of sending the indication information, the second moment includes a subsequent moment of sending the indication information, and the second time period includes a subsequent time period of sending the indication information.

### Embodiment four

This embodiment further provides a message receiving apparatus. The apparatus is configured to implement the above-mentioned embodiments and optional embodiments. What has been described will not be repeated. As used below, the term "module" may be software, hardware or a combination of software and hardware capable of implementing predetermined functions. The apparatus described below in the embodiment may be implemented by software, but implementation by hardware or by a combination of software and hardware is also possible and conceived.

FIG. 4 is a structural block diagram of a message receiving apparatus according to an embodiment of the present invention. As shown in FIG. 4, the apparatus includes a receiving module 40.

The receiving module 40 is configured to receive indication information, where the indication information is sent in downlink control information or uplink control information.

The indication information indicates at least one of: information about a downlink data transmission of a first moment or a first time period of sending the indication information, or information about an uplink data transmission of a second moment or a second time period of sending the indication information.

According to the above module, the receiving module 40 receives the indication information, and knows the information about the downlink data transmission of the first moment or the first time period of sending the indication information, and/or the information about the uplink data transmission of the second moment or the second time period of sending the indication information. By using the solution, the terminal can acquire the information about the downlink data transmission of the first moment or the first time period of sending the indication information, and/or the information about the uplink data transmission of the second moment or the second time period of sending the indication information, so that the LTE-MTC terminal or the NB-IoT terminal can know whether its own resources are occupied by other services, and the transmission performance of LTE-MTC/NB-IoT users can be improved.

In the embodiment of the present invention, the terminal receives the indication information sending the data transmission. After the indication information is sent in the downlink control information or the uplink control information, the method further includes a step described below.

The terminal determines a decoding strategy for a currently received data packet according to the indication information.

In the embodiment of the present invention, the decoding strategy includes one of merging the currently received data packet with a previous data packet, or merging the currently received data packet with data packets of a previous segment, and decoding a merged data packet; dropping a previous data packet or data packets of a previous segment, and decoding the currently received data packet; or merging the currently received data packet with part of a previous data packet, or merging the currently received data packet with part of data packets of a previous segment, and decoding a merged data packet.

In an embodiment of the present invention, after the terminal receives the indication information, the method further includes a step described below.

The terminal determines to change a manner of sending data at the second moment according to the indication information.

In the embodiment of the present invention, determining, by the terminal, according to the indication information, to change a manner of sending data at the second moment includes terminating data transmission on part of resources corresponding to the data sent at the second moment; or extending a sending duration of sending the data at the second moment.

In the embodiment of the present invention, the first moment includes a preceding moment of sending the indication information, the first time period includes a preceding time period of sending the indication information, the second moment includes a subsequent moment of sending the indication information, and the second time period includes a subsequent time period of sending the indication information.

Optional embodiments of the present invention are illustrated with a system in which an LTE-MTC system/NB-IoT system and an NR system coexist as an example.

### Optional embodiment one

This optional embodiment gives an indication method of information transmission.

In step 1, information indicating a downlink data transmission of a first moment or a first time period is sent in downlink control information currently sent.

The downlink control information refers to downlink control information scheduled retransmission data packet sent by the current control channel or common downlink control information (common DCI).

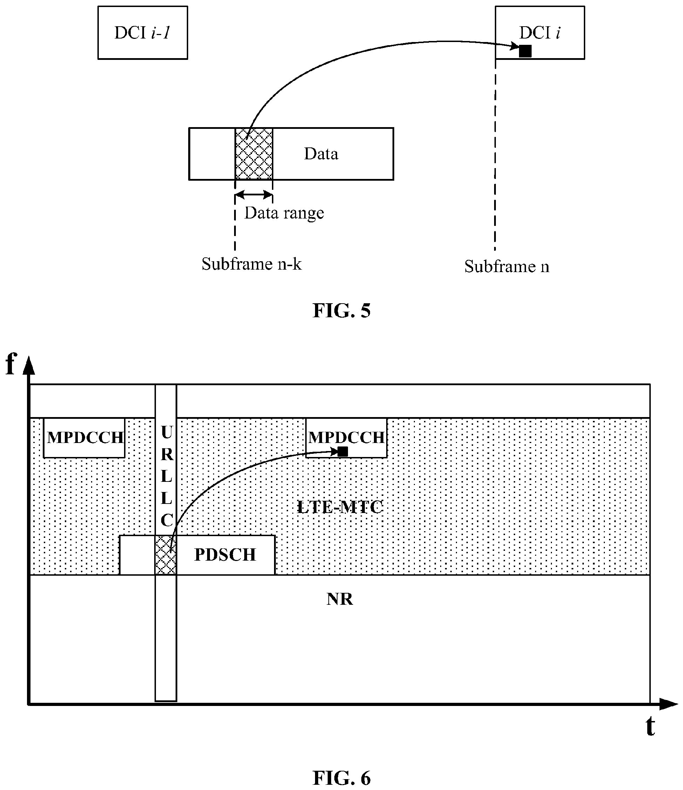

As shown in FIG. 5, in a case where a start sending moment of the current control channel is a moment n (or a subframe n), the preceding moment is a moment n-k (or a subframe n-k).

In a case where a start moment of the current control channel is a moment n (or a subframe n), the preceding time period is a time period starting from a moment n-k (or a subframe n-k) and having a length of m (or m subframes).

Further, the transmission information of the data specifically includes at least one of data interference information, data muting information, data drop information, data puncture information, indication information of data merging, indication information of a data decoding manner, indication information of a data mapping manner or indication information of a data transmission resource. The indication information of the data mapping manner refers to a newly data mapping manner temporarily adjusted by the base station according to an interference condition of a data sending resource when data is actually sent. The indication information of the data transmission resource refers to resource range information of data transmission in the preceding moment or the preceding time period, and which data resources may be specifically included.

In step 2, after the terminal decodes the current downlink control information, a decoding strategy of the current data packet is determined according to the transmission information of data of the previous moment or the previous time period in the downlink control information. The decoding strategy includes one of or a combination of: merging the current data packet with a previous data packet, or merging the current data packet with data packets of a previous segment, and decoding a merged data packet, dropping a previous data packet or data packets of a previous segment, and merely decoding the current data packet, or merging the current data packet with part of a previous data packet, or merging the current data packet with part of data packets of a previous segment, and decoding a partly merged data packet.

According to the above solution of the embodiment, the terminal can flexibly determine a decoding manner used by the uplink/downlink data packet according to the transmission information of data of the previous moment or the previous time period included in the downlink control information, and the transmission efficiency of the data channel is improved.

### Optional embodiment two

This optional embodiment provides a method for reducing coexistence interference of an NR system to an LTE-MTC system when the LTE-MTC system and the NR system coexist.

As shown in FIG. 6, in the coexistence system of the LTE-MTC and the NR, when the LTE-MTC schedules the uplink or downlink data traffic, the NR system needs to send the URLLC traffic with a low delay requirement, and the URLLC traffic will preempt sending resources of a physical downlink shared channel (PDSCH) or a physical uplink shared channel (PUSCH) scheduled by the LTE-MTC. In FIG. 6, MPDCCH represents a machine type communications-physical downlink control channel (MTC-PDCCH).

In step 1, the base station sets interference information of a previous transmission (or a first transmission) packet in the downlink control information scheduled by the retransmission data packet according to whether the uplink or downlink data sending resources of a previous transmission (or the first transmission) LTE-MTC are occupied by the NR traffic.

The interference information of a previous transmission (or the first transmission) packet is indicated through a newly field or an unused status bit in the downlink control information.

When the interference information of the previous transmission (or first transmission) packet is indicated through a newly field in the downlink control information (DCI), the interference information of the first transmission packet is identified through one bit information or a plurality of bit information.

When the interference information of the previous transmission (or the first transmission) packet identifies the interference information of the previous transmission (or the first transmission) packet through one bit information in the downlink control information (DCI), and the one bit information indicates whether the previous transmission (or the first transmission) packet is interfered or not.
1) When the one bit information indicates that the previous transmission (or the first transmission) packet is interfered, when the terminal receives a retransmission packet, it does not merge the retransmission packet with the previous transmission (or the first transmission) packet, drop the previous transmission (or the first transmission) packet and merely decode the retransmission packet when decoding. Alternatively when the one bit information indicates that the previous transmission (or the first transmission) packet is interfered, when the terminal receives a retransmission packet, it will simultaneously attempt to merge the retransmission packet with the previous transmission (or the first transmission) packet or merely decode the retransmission packet when decoding, and select a decoding manner with good performance.
2) When the one bit information indicates that the previous transmission (or the first transmission) packet is not interfered, the retransmission packet is merged with the previous transmission (or the first transmission) packet when the terminal receives a retransmission packet.

Alternatively the interference information of the previous transmission (or the first transmission) packet indicates the interference information of the previous transmission (or the first transmission) packet through multiple bit information in the downlink control information (DCI). For example, two bit information indicates the interference information of the previous transmission (or the first transmission) packet, as shown in Table 1 or Table 2 (the table is only an example, not exhaustive):

**Table 1**

| An interference information indication of the previous transmission (or the first transmission) packet | | Meaning |
|---|---|---|
| | 00 | The ratio of the previous transmission (or the first transmission) packet occupied by the NR traffic is less than 1/4 (or a predefined value). |
| | 01 | The ratio of the previous transmission (or the first transmission) packet occupied by the NR traffic is greater than or equal to 1/4 and less than 1/2(or a predefined value). |
| | 11 | The ratio of the previous transmission (or the first transmission) packet occupied by the NR traffic is greater than or equal to 1/2 and less than 3/4(or a predefined value). |
| | 10 | The ratio of the previous transmission (or the first transmission) packet occupied by the NR traffic is greater than or equal to 3/4(or a predefined value). |

**Table 2**

| An interference information indication of the previous transmission (or the first transmission) packet | | Meaning |
|---|---|---|
| | 00 | A slot/subframe 1 is interfered (or occupied or punched or muted or dropped, etc.) |
| | 01 | A slot/subframe 2 is interfered (or occupied or punched or muted or dropped, etc.) |
| | 11 | Slots/subframes 1 and 2 are interfered (or occupied or punched or muted or dropped, etc.) |
| | 10 | A previous transmission (the first transmission) packet is not interfered (or occupied or punched or muted or dropped, etc.) |

Alternatively the interference information of the previous transmission (or the first transmission) packet indicates the interference information of the previous transmission (or the first transmission) packet through a remaining state of the existing field in the downlink control information (DCI).

Alternatively the interference information of the previous transmission (or the first transmission) packet indicates the interference information of the previous transmission (or the first transmission) packet through two remaining states of the existing field in the downlink control information (DCI).
1) When the remaining state indicates that the previous transmission (or the first transmission) packet is interfered, when the terminal receives a retransmission packet, it does not merge the retransmission packet with the previous transmission (or the first transmission) packet, drop the previous transmission (or the first transmission) packet and merely decode the retransmission packet when decoding. Alternatively when the one bit information indicates that the previous transmission (or the first transmission) packet is interfered, when the terminal receives a retransmission packet, it will simultaneously attempt to merge the retransmission packet with the previous transmission (or the first transmission) packet or merely decode the retransmission packet when decoding, and select a decoding manner with good performance.
2) When the remaining state indicates that the previous transmission (or the first transmission) packet is not interfered, the retransmission packet is merged with the previous transmission (or the first transmission) packet when the terminal receives a retransmission packet.

Alternatively the interference information of the previous transmission (or the first transmission) packet identifies the interference information of the previous transmission (or the first transmission) packet through multiple remaining states (> 2) in the downlink control information (DCI). For example:

**Table 3**

| An interference information indication of the previous transmission (or the first transmission) packet | | Meaning |
|---|---|---|
| | Remaining state 1 | The number of invalid or interfered slots/subframes in the time domain is less than a. |
| | Remaining state 2 | The number of invalid or interfered slots/subframes in the time domain is greater than or equal to a and less than b. |
| | Remaining state 3 | The number of invalid or interfered slots/subframes in the time domain is greater than or equal to b and less than c. |
| | Remaining state 4 | The number of invalid or interfered slots/subframes in the time domain is greater than or equal to c. |

In step 2, the base station sends the downlink control information of the retransmission packet, and the downlink control information includes the interference information of the previous transmission (the first transmission) packet.

The LTE-MTC terminal determines a merging strategy of a decoding retransmission packet according to the interference information indication of the previous transmission (or the first transmission) packet included in the downlink control information.

The merging strategy of the decoding retransmission packet includes one of or a combination of: merging the current data packet with a previous data packet, or merging the current data packet with data packets of a previous segment, and decoding a merged data packet, dropping a previous data packet or data packets of a previous segment, and merely decoding the current data packet, or merging the current data packet with part of a previous data packet, or merging the current data packet with part of data packets of a previous segment, and decoding a partly merged data packet.

According to the method of the embodiment, the LTE-MTC terminal can flexibly determine a decoding manner used by the uplink/downlink data packet according to the interference information of the previous transmission (or the first transmission) packet included in the downlink control information of the retransmission packet, and the transmission efficiency of the PDSCH/PUSCH in the LTE-MTC system is improved.

### Optional embodiment three

This optional embodiment provides a method for reducing coexistence interference of an NR system to an NB-IoT system when the NB-IoT system and the NR system coexist.

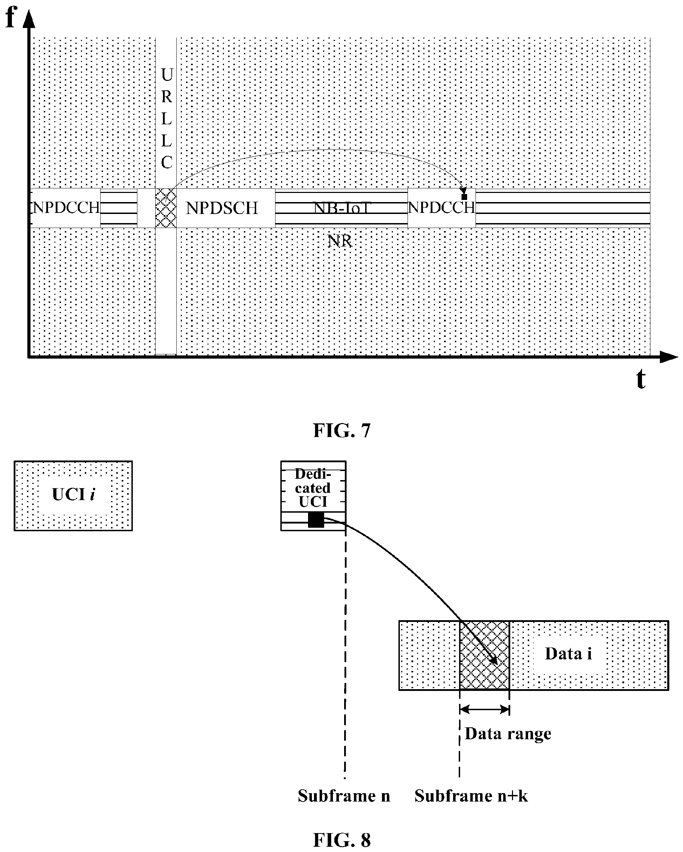

As shown in FIG. 7, in the coexistence system of the NB-IoT and the NR, when the NB-IoT schedules the uplink or downlink data traffic, the NR system needs to send the URLLC traffic with a low delay requirement, and the URLLC traffic will preempt sending resources of a narrowband physical downlink shared channel (NPDSCH) or a narrowband physical uplink shared channel (NPUSCH) scheduled by the NB-IoT. In FIG. 7, NPDCCH represents a narrowband physical downlink control channel (NPDCCH).

In step 1, the base station sets interference information of a previous transmission (or a first transmission) packet in the downlink control information scheduled by the retransmission data packet according to whether the uplink or downlink data sending resources of a previous transmission (or the first transmission) NB-IoT are occupied by the NR traffic.

The interference information of previous transmission (or the first transmission) packet is indicated through a newly field or an unused status bit in the downlink control information.

When the interference information of the previous transmission (or first transmission) packet is indicated through a newly field in the downlink control information (DCI), the interference information of the previous transmission (or the first transmission) packet is identified through one bit information or a plurality of bit information.

When the interference information of the previous transmission (or the first transmission) packet identifies the interference information of the previous transmission (or the first transmission) packet through one bit information in the downlink control information (DCI), and the one bit information indicates whether the previous transmission (or the first transmission) packet is interfered or not.
1) When the one bit information indicates that the previous transmission (or the first transmission) packet is interfered, when the terminal receives a retransmission packet, it does not merge the retransmission packet with the previous transmission (or the first transmission) packet, drop the previous transmission (or the first transmission) packet and merely decode the retransmission packet when decoding. Alternatively when the one bit information indicates that the previous transmission (or the first transmission) packet is interfered, when the terminal receives a retransmission packet, it will simultaneously attempt to merge the retransmission packet with the previous transmission (or the first transmission) packet or merely decode the retransmission packet when decoding, and select a decoding manner with good performance.
2) When the one bit information indicates that the previous transmission (or the first transmission) packet is not interfered, the retransmission packet is merged with the previous transmission (or the first transmission) packet when the terminal receives a retransmission packet.

Alternatively, the interference information of the previous transmission (or the first transmission) packet indicates the interference information of the previous transmission (or the first transmission) packet through multiple bit information in the downlink control information (DCI). For example, two bit information indicates the interference information of the previous transmission (or the first transmission) packet, as shown in Table 4 or 5:

**Table 4**

| An interference information indication of the previous transmission (or the first transmission) packet | Meaning |
|---|---|
| 00 | The number of invalid or interfered slots/subframes in the time domain is less than a. |
| 01 | The number of invalid or interfered slots/subframes in the time domain is greater than or equal to a and less than b. |
| 11 | The number of invalid or interfered slots/subframes in the time domain is greater than or equal to b and less than c. |
| 10 | The number of invalid or interfered slots/subframes in the time domain is greater than or equal to c. |

**Table 5**

| An interference information indication of the previous transmission (or the first transmission) packet | Meaning |
|---|---|
| 00 | A previous transmission (or first transmission) packet in a first-half time domain is interfered (or occupied or punched or muted or dropped, etc.). |
| 01 | A previous transmission (or first transmission) packet in a first-half time domain is interfered (or occupied or punched or muted or dropped, etc.) |
| 11 | A previous transmission (or first transmission) packet in an entire time domain is interfered (or occupied or punched or muted or dropped, etc.). |
| 10 | A previous transmission (or first transmission) packet is not interfered (or occupied or punched or muted or dropped, etc.). |

Alternatively, the interference information of the previous transmission (or the first transmission) packet indicates the interference information of the previous transmission (or the first transmission) packet through remaining states of the existing field in the downlink control information (DCI).

Alternatively, the interference information of the previous transmission (or the first transmission) packet indicates the interference information of the previous transmission (or the first transmission) packet through two remaining states of the existing field in the downlink control information (DCI).
1) When the remaining state indicates that the previous transmission (or the first transmission) packet is interfered, when the terminal receives a retransmission packet, it does not merge the retransmission packet with the previous transmission (or the first transmission) packet, drop the previous transmission (or the first transmission) packet and merely decode the retransmission packet when decoding. Alternatively, when the one bit information indicates that the previous transmission (or the first transmission) packet is interfered, when the terminal receives a retransmission packet, it will simultaneously attempt to merge the retransmission packet with the previous transmission (or the first transmission) packet or merely decode the retransmission packet when decoding, and select a decoding manner with good performance.
2) When the remaining state indicates that the previous transmission (or the first transmission) packet is not interfered, the retransmission packet is merged with the previous transmission (or the first transmission) packet when the terminal receives a retransmission packet.

Alternatively, the interference information of the previous transmission (or the first transmission) packet identifies the interference information of the previous transmission (or the first transmission) packet through multiple remaining states (> 2) in the downlink control information (DCI). For example:

**Table 6**

| An interference information indication of the previous transmission (or the first transmission) packet | | Meaning |
|---|---|---|
| | Remaining state 1 | The ratio of the previous transmission (or the first transmission) packet occupied by the NR traffic is less than 1/4 (or a predefined value). |
| | Remaining state 2 | The ratio of the previous transmission (or the first transmission) packet occupied by the NR traffic is greater than or equal to 1/4 and less than 1/2(or a predefined value). |
| | Remaining state 3 | The ratio of the previous transmission (or the first transmission) packet occupied by the NR traffic is greater than or equal to 1/2 and less than 3/4(or a predefined value). |
| | Remaining state 4 | The ratio of the previous transmission (or the first transmission) packet occupied by the NR traffic is greater than or equal to 3/4(or a predefined value). |

In step 2, the base station sends the downlink control information of the retransmission packet, and the downlink control information includes the interference information of the previous transmission (the first transmission) packet.

The NB-IoT terminal determines a merging strategy of a decoding retransmission packet according to the interference information indication of the previous transmission (or the first transmission) packet included in the downlink control information.

The merging strategy of the decoding retransmission packet includes one of or a combination of: merging the current data packet with a previous data packet, or merging the current data packet with data packets of a previous segment, and decoding a merged data packet, dropping a previous data packet or data packets of a previous segment, and merely decoding the current data packet, or merging the current data packet with part of a previous data packet, or merging the current data packet with part of data packets of a previous segment, and decoding a partly merged data packet.

According to the method of the embodiment, the NB-IoT terminal can flexibly determine a decoding manner used by the uplink/downlink data packet according to the interference information of the previous transmission (or the first transmission) included in the downlink control information of the retransmission packet, and the transmission efficiency of the NPDSCH/NPUSCH in the NB-IoT system is improved.

### Optional embodiment four

This optional embodiment gives an indication method of information transmission.

As shown in FIG. 8, in the coexistence system of the LTE-MTC and the NR, when the LTE-MTC schedules the uplink data traffic, the NR system needs to send the URLLC traffic with a low delay requirement, and the URLLC traffic will preempt sending resources of the PUSCH scheduled by the NB-IoT. At the moment, the uplink control information is not used for scheduling a packet, but is dedicated to send the indication information. UCI in FIG. 8 represent the uplink control information (UCI).

In step 1, the base station sends the indication information in dedicated uplink control information. The dedicated uplink control information is not used for scheduling an uplink data packet or may be considered as a special form of scheduling a retransmission packet.

The indication information includes at least one of uplink data channel interference information, uplink data channel muting information, uplink data channel drop information, uplink data channel puncture information, indication information of an uplink data channel mapping manner, uplink data channel delay sending information or indication information of an uplink data channel transmission resource. The indication information may be single information or a combination of a plurality of information.

The uplink data channel includes one of an uplink data channel being sent by the terminal, or an uplink data channel scheduled by the base station but not started to be sent by the terminal.

The indication information of the data mapping manner refers to a data mapping manner adjusted the uplink data channel adjusted by the base station according to an uplink interference condition or a burst traffic scheduling condition.

The indication information of the data transmission resource refers to a resource size or range information of data transmission adjusted by the base station according to the uplink interference condition or the burst traffic scheduling condition, and which data resources may be specifically included.

The indication information further includes one of the following information: a start position at which the uplink data channel is interfered, a start position at which the uplink data channel is muted (or dropped or punched), a length of interference to the uplink data channel, or a length in which the uplink data channel is muted (or dropped or punched).

Further, the start position is an interfered start position or a relative value between a start position at which the uplink data channel is muted (or dropped or punched) and a sending end position of the uplink control information for sending the indication information.

In a case where sending of the uplink control information for sending the control information ends in a subframe n and the start position in the control information is a subframe k, the indicated interfered start position or the start position at which the uplink data channel is muted (or dropped or punched) is a subframe n+k.

In step 2, the terminal performs a corresponding processing on an uplink data channel being sent or an uplink data channel scheduled by the base station but not started to be sent by the terminal.

For the uplink data channel being sent, the terminal performs puncture, muting or drop processing on the uplink data channel being sent according to the received indication information.

For the uplink data channel scheduled but not started to be sent by the terminal, the terminal performs puncture, muting, drop or remapping processing on the uplink data channel according to the received indication information, or readjusts a processing of a sending position according to the transmission resource indicated by the indication information. If the terminal receives the delay sending information, the terminal will avoid an interfered region (or a muting or puncture region) and restore sending of the uplink data channel after the interfered region ends.

According to the method of the present invention, the LTE-MTC terminal can flexibly adjust sending of the uplink data channel being sent according to the indication information included in the uplink control information, or adjust the uplink data channel scheduled by the base station but not started to be sent, and the transmission efficiency of the PUSCH in the LTE-MTC system is improved.

### Embodiment five

An embodiment of the present invention further provides a storage medium. The storage medium includes a stored program. When the program is executed, the method of any one of the preceding embodiments is performed.

Optionally, in this embodiment, the storage medium may be configured to store program codes for performing a step below.

In S1, indication information is sent, where the indication information is sent in downlink control information or uplink control information, and the indication information indicates at least one of: information about a downlink data transmission of a first moment or a first time period of sending the indication information, or information about an uplink data transmission of a second moment or a second time period of sending the indication information.

An embodiment of the present invention further provides a storage medium. The storage medium includes a stored program. When the program is executed, the method of any one of the preceding embodiments is performed.

Optionally, in this embodiment, the storage medium may be configured to store program codes for performing the steps below.

In S2, indication information is received, where the indication information is sent in downlink control information or uplink control information, and the indication information indicates at least one of: information about a downlink data transmission of a first moment or a first time period of sending the indication information, or information about an uplink data transmission of a second moment or a second time period of sending the indication information.

Optionally, in this embodiment, the storage medium may include, but is not limited to, a universal serial bus (USB) flash disk, a read-only memory (ROM), a random access memory (RAM), a mobile hard disk, a magnetic disk, an optical disk or another medium capable of storing program codes.

Optionally, for specific examples in this embodiment, refer to the examples described in the embodiments and optional implementations above, which are not repeated in this embodiment.

Apparently, those skilled in the art should understand that various modules or steps described above of the present invention may be implemented by a general-purpose computing apparatus, the various modules or steps may be concentrated on a single computing apparatus or distributed on a network composed of multiple computing apparatuses. Optionally, the various modules or steps may be implemented by program codes executable by the computing apparatus, so that the modules or steps may be stored in a storage apparatus for execution by the computing apparatus, and in some circumstances, the illustrated or described steps may be performed in sequences different from those described herein, or the module or steps may be made into one or various integrated circuit modules separately, or multiple modules or steps therein may be made into a single integrated circuit module for implementation. Therefore, the present invention is not limited to a particular combination of hardware and software.

## Claims

1. A method for sending a message, comprising:
sending (S102), by a base station, indication information; wherein the indication information is sent in downlink control information,
**characterized in that** the indication information indicates: information about a downlink data transmission of a first moment or a first time period,
wherein the downlink control information is sent in a control channel, and the method further comprises:
in a case where a start sending subframe of the control channel is a subframe n, the first moment being a subframe n-k; or
in a case where a start subframe of the control channel is a subframe n, the first time period being a time period starting from a subframe n-k and having a length of m subframes;
wherein both k and m are positive integers,
wherein the indication information comprises at least one of:
downlink data interference information;
downlink data muting information;
downlink data drop information;
indication information of a downlink data mapping manner; or
indication information of a downlink data transmission resource.

2. The method of claim 1, wherein the downlink control information comprises at least one of: downlink control information for scheduling a traffic channel, common downlink control information or dedicated downlink control information.

3. The method of claim 1, further comprising:
in a case where the downlink control information is downlink control information scheduled for a retransmission data packet, determining, by the base station, the indication information according to data in a previous transmission or data transmission in a first transmission.

4. The method of claim 1, wherein the indication information further comprises one of the following information:
a start position at which a data channel is interfered;
a start position at which a data channel is muted or dropped.
a length of interference to a data channel;
a length in which a data channel is muted or dropped;
delay transmission information of a data channel;
newly added transmission resource information of a data channel; or
retransmission information of a data channel.

5. The method of any one of claims 1 to 3, wherein the first moment comprises a preceding moment of sending the indication information, the first time period comprises a preceding time period of sending the indication information.

6. A method for receiving a message, comprising:
receiving (S302), by a terminal, indication information, wherein the indication information is sent in downlink control information;
**characterized in that** the indication information indicates: information about a downlink data transmission of a first moment or a first time period,
wherein the downlink control information is sent in a control channel, and the method further comprises:
in a case where a start sending subframe of the control channel is a subframe n, the first moment being a subframe n-k; or
in a case where a start subframe of the control channel is a subframe n, the first time period being a time period starting from a subframe n-k and having a length of m subframes;
wherein both k and m are positive integers,
wherein the indication information comprises at least one of:
downlink data interference information;
downlink data muting information;
downlink data drop information;
indication information of a downlink data mapping manner; or
indication information of a downlink data transmission resource.

7. The method of claim 6, after receiving, by the terminal, the indication information about the data transmission, further comprising:
determining, by the terminal, according to the indication information, a decoding strategy for a currently received data packet,
wherein the decoding strategy comprises one of:
merging the currently received data packet with a previous data packet, or merging the currently received data packet with data packets of a previous segment, and decoding a merged data packet;
dropping a previous data packet or data packets of a previous segment, and decoding the currently received data packet; or
merging the currently received data packet with part of a previous data packet, or merging the currently received data packet with part of data packets of a previous segment, and decoding a merged data packet.

8. The method of any one of claims 6 to 7, wherein the first moment comprises a preceding moment of sending the indication information, the first time period comprises a preceding time period of sending the indication information.

9. A message sending apparatus, applied to a base station, comprising:
a sending module (20), configured to send indication information; wherein the indication information is sent in downlink control information,
**characterized in that** the indication information indicates: information about a downlink data transmission of a first moment or a first time period,
wherein the downlink control information is sent in a control channel, and the method further comprises:
in a case where a start sending subframe of the control channel is a subframe n, the first moment being a subframe n-k; or
in a case where a start subframe of the control channel is a subframe n, the first time period being a time period starting from a subframe n-k and having a length of m subframes;
wherein both k and m are positive integers,
wherein the indication information comprises at least one of:
downlink data interference information;
downlink data muting information;
downlink data drop information;
indication information of a downlink data mapping manner; or
indication information of a downlink data transmission resource.

10. A message receiving apparatus, applied to a terminal, comprising:
a receiving module (40), which is configured to receive indication information, wherein the indication information is sent in downlink control information;
**characterized in that** the indication information indicates: information about a downlink data transmission of a first moment or a first time period of sending the indication information,
wherein the downlink control information is sent in a control channel, and the method further comprises:
in a case where a start sending subframe of the control channel is a subframe n, the first moment being a subframe n-k; or
in a case where a start subframe of the control channel is a subframe n, the first time period being a time period starting from a subframe n-k and having a length of m subframes;
wherein both k and m are positive integers,
wherein the indication information comprises at least one of:
downlink data interference information;
downlink data muting information;
downlink data drop information;
indication information of a downlink data mapping manner; or
indication information of a downlink data transmission resource.

11. A storage medium, with stored therein a computer program, wherein the computer program, when executed, is configured to perform the method of any one of claims 1 to 5 or the method of any one of claims 6 to 8.

## Patentansprüche

1. Verfahren zum Senden einer Nachricht, umfassend:
Senden (S102), durch eine Basisstation, von Hinweisinformationen; wobei die Hinweisinformationen in Downlink-Steuerinformationen gesendet werden,
**dadurch gekennzeichnet, dass** die Hinweisinformationen angeben: Informationen über eine Downlink-Datenübertragung eines ersten Moments oder eines ersten Zeitraums,
wobei die Downlink-Steuerinformationen in einem Steuerkanal gesendet werden, und das Verfahren ferner umfasst:
für den Fall, dass ein Sendestartteilrahmen des Steuerkanals ein Teilrahmen n ist, der erste Moment ein Teilrahmen n-k ist; oder
für den Fall, dass ein Startteilrahmen des Steuerkanals ein Teilrahmen n ist, der erste Zeitraum ein Zeitraum ist, der mit einem Teilrahmen n-k beginnt und eine Länge von m Teilrahmen aufweist;
wobei sowohl k als auch m positive Ganzzahlen sind,
wobei die Hinweisinformationen mindestens eines umfassen von:
Interferenzinformationen von Downlink-Daten;
Stummschaltungsinformationen von Downlink-Daten;
Absetzinformationen von Downlink-Daten;
Hinweisinformationen einer Art der Downlink-Datenzuordnung; oder
Hinweisinformationen einer Downlink-Datenübertragungsressource.

2. Verfahren nach Anspruch 1, wobei die Downlink-Steuerinformationen mindestens eines umfassen von: Downlink-Steuerinformationen zum Planen eines Verkehrskanals, gemeinsame Downlink-Steuerinformationen oder dedizierte Downlink-Steuerinformationen.

3. Verfahren nach Anspruch 1, ferner umfassend:
für den Fall, dass die Downlink-Steuerinformationen Downlink-Steuerinformationen sind, die für ein Weiterübertragungsdatenpaket geplant sind, Bestimmen, durch die Basisstation, der Hinweisinformationen gemäß Daten in einer vorhergehenden Übertragung oder einer Datenübertragung in einer ersten Übertragung.

4. Verfahren nach Anspruch 1, wobei die Hinweisinformationen ferner eine der folgenden Informationen umfassen:
eine Startposition, in der mit einem Datenkanal interferiert wird;
eine Startposition, in der ein Datenkanal stummgeschaltet oder abgesetzt wird,
eine Interferenzlänge bis zu einem Datenkanal;
eine Länge, über die ein Datenkanal stummgeschaltet oder abgesetzt wird;
Verzögerungsübertragungsinformationen eines Datenkanals;
Informationen über neu hinzugefügte Übertragungsressourcen eines Datenkanals; oder
Weiterübertragungsinformationen eines Datenkanals.

5. Verfahren nach einem der Ansprüche 1 bis 3, wobei der erste Moment einen vorhergehenden Moment des Sendens der Hinweisinformationen umfasst, wobei der erste Zeitraum einen vorhergehenden Zeitraum des Sendens der Hinweisinformationen umfasst.

6. Verfahren zum Empfangen einer Nachricht, umfassend:
Empfangen (S302), durch ein Endgerät, von Hinweisinformationen, wobei die Hinweisinformationen in Downlink-Steuerinformationen gesendet werden;
**dadurch gekennzeichnet, dass** die Hinweisinformationen angeben: Informationen über eine Downlink-Datenübertragung eines ersten Moments oder eines ersten Zeitraums,
wobei die Downlink-Steuerinformationen in einem Steuerkanal gesendet werden, und das Verfahren ferner umfasst:
für den Fall, dass ein Sendestartteilrahmen des Steuerkanals ein Teilrahmen n ist, der erste Moment ein Teilrahmen n-k ist; oder
für den Fall, dass ein Startteilrahmen des Steuerkanals ein Teilrahmen n ist, der erste Zeitraum ein Zeitraum ist, der mit einem Teilrahmen n-k beginnt und eine Länge von m Teilrahmen aufweist;
wobei sowohl k als auch m positive Ganzzahlen sind,
wobei die Hinweisinformationen mindestens eines umfassen von:
Interferenzinformationen von Downlink-Daten;
Stummschaltungsinformationen von Downlink-Daten;
Absetzinformationen von Downlink-Daten;
Hinweisinformationen einer Art der Downlink-Datenzuordnung; oder
Hinweisinformationen einer Downlink-Datenübertragungsressource.

7. Verfahren nach Anspruch 6, wobei nach dem Empfangen, durch das Endgerät, die Hinweisinformationen über die Datenübertragung ferner umfassen:
Bestimmen, durch das Endgerät, gemäß den Hinweisinformationen, einer Decodierungsstrategie für ein derzeit empfangenes Datenpaket,
wobei die Decodierungsstrategie eines umfasst von:
Zusammenführen des derzeit empfangenen Datenpakets mit einem vorhergehenden Datenpaket, oder Zusammenführen des derzeit empfangenen Datenpakets mit Datenpaketen eines vorhergehenden Segments, und Decodieren eines zusammengeführten Datenpakets;
Absetzen eines vorhergehenden Datenpakets oder von Datenpaketen eines vorhergehenden Segments, und Decodieren des derzeit empfangenen Datenpakets; oder
Zusammenführen des derzeit empfangenen Datenpakets mit einem Teil eines vorhergehenden Datenpakets, oder Zusammenführen des derzeit empfangenen Datenpakets mit einem Teil von Datenpaketen eines vorhergehenden Segments, und Decodieren eines zusammengeführten Datenpakets.

8. Verfahren nach einem der Ansprüche 6 bis 7, wobei der erste Moment einen vorhergehenden Moment des Sendens der Hinweisinformationen umfasst, wobei der erste Zeitraum einen vorhergehenden Zeitraum des Sendens der Hinweisinformationen umfasst.

9. Nachrichtensendegerät, das auf eine Basisstation angewendet wird, umfassend:
ein Sendemodul (20), das dazu konfiguriert ist, Hinweisinformationen zu senden; wobei die Hinweisinformationen in Downlink-Steuerinformationen gesendet werden,
**dadurch gekennzeichnet, dass** die Hinweisinformationen angeben: Informationen über eine Downlink-Datenübertragung eines ersten Moments oder eines ersten Zeitraums,
wobei die Downlink-Steuerinformationen in einem Steuerkanal gesendet werden, und das Verfahren ferner umfasst:
für den Fall, dass ein Sendestartteilrahmen des Steuerkanals ein Teilrahmen n ist, der erste Moment ein Teilrahmen n-k ist; oder
für den Fall, dass ein Startteilrahmen des Steuerkanals ein Teilrahmen n, der erste Zeitraum ein Zeitraum ist, der mit einem Teilrahmen n-k beginnt und eine Länge von m Teilrahmen aufweist;
wobei sowohl k als auch m positive Ganzzahlen sind,
wobei die Hinweisinformationen mindestens eines umfassen von:
Interferenzinformationen von Downlink-Daten;
Stummschaltungsinformationen von Downlink-Daten;
Absetzinformationen von Downlink-Daten;
Hinweisinformationen einer Art der Downlink-Datenzuordnung; oder
Hinweisinformationen einer Downlink-Datenübertragungsressource.

10. Nachrichtenempfangsgerät, das auf ein Endgerät angewendet wird, umfassend:
ein Empfangsmodul (40), das dazu konfiguriert ist, Hinweisinformationen zu empfangen, wobei die Hinweisinformationen in Downlink-Steuerinformationen gesendet werden;
**dadurch gekennzeichnet, dass** die Hinweisinformationen angeben: Informationen über eine Downlink-Datenübertragung eines ersten Moments oder eines ersten Zeitraums des Sendens der Hinweisinformationen,
wobei die Downlink-Steuerinformationen in einem Steuerkanal gesendet werden, und das Verfahren ferner umfasst:
für den Fall, dass ein Sendestartteilrahmen des Steuerkanals ein Teilrahmen n ist, der erste Moment ein Teilrahmen n-k ist; oder
für den Fall, dass ein Startteilrahmen des Steuerkanals ein Teilrahmen n ist, der erste Zeitraum ein Zeitraum ist, der mit einem Teilrahmen n-k beginnt und eine Länge von m Teilrahmen aufweist;
wobei sowohl k als auch m positive Ganzzahlen sind,
wobei die Hinweisinformationen mindestens eines umfassen von:
Interferenzinformationen von Downlink-Daten;
Stummschaltungsinformationen von Downlink-Daten;
Absetzinformationen von Downlink-Daten;
Hinweisinformationen einer Art der Downlink-Datenzuordnung; oder
Hinweisinformationen einer Downlink-Datenübertragungsressource.

11. Speichermedium, auf dem ein Computerprogramm gespeichert ist, wobei das Computerprogramm, wenn es ausgeführt wird, dazu konfiguriert ist, das Verfahren nach einem der Ansprüche 1 bis 5 oder das Verfahren nach einem der Ansprüche 6 bis 8 auszuführen.

## Revendications

1. Procédé pour l'envoi d'un message, comprenant :
l'envoi (S102), par une station de base, d'informations d'indication ; dans lequel les informations d'indication sont envoyées dans des informations de commande de liaison descendante,
**caractérisé en ce que** les informations d'indication indiquent : des informations concernant une émission de données de liaison descendante d'un premier moment ou d'une première durée,
dans lequel les informations de commande de liaison descendante sont envoyées dans un canal de commande, et le procédé comprend en outre :
dans un cas où une sous-trame de début d'envoi du canal de commande est une sous-trame n, le premier moment étant une sous-trame n-k ; ou
dans un cas où une sous-trame de début du canal de commande est une sous-trame n, la première durée étant une durée débutant à partir d'une sous-trame n-k et ayant une longueur de m sous-trames ;
dans lequel à la fois k et m sont deux des nombres entiers positifs,
dans lequel les informations d'indication comprennent en outre au moins des informations parmi :
des informations de brouillage de données de liaison descendante ;
des informations d'inhibition de données de liaison descendante ;
des informations d'abandon de données de liaison descendante ;
des informations d'indication d'un mode de mappage de données de liaison descendante ; ou
des informations d'indication d'une ressource d'émission de données de liaison descendante.

2. Procédé selon la revendication 1, dans lequel les informations de commande de liaison descendante comprennent au moins des informations parmi : des informations de commande de liaison descendante pour l'ordonnancement d'un canal de trafic, des informations de commande de liaison descendante communes ou des informations de commande de liaison descendante dédiées.

3. Procédé selon la revendication 1, comprenant en outre :
dans un cas où les informations de commande de liaison descendante sont des informations de commande de liaison descendante ordonnancées pour un paquet de données de retransmission, la détermination, par la station de base, des informations d'indication selon des données dans une émission précédente ou une émission de données dans une première émission.

4. Procédé selon la revendication 1, dans lequel les informations d'indication comprennent en outre des informations parmi les informations suivantes :
une position de début à laquelle un canal de données est brouillé ;
une position de début à laquelle un canal de données est inhibé ou abandonné ;
une longueur de brouillage sur un canal de données ;
une longueur sur laquelle un canal de données est inhibé ou abandonné ;
des informations d'émission de retard d'un canal de données ;
des informations de ressource d'émission nouvellement ajoutées d'un canal de données ; ou
des informations de réémission d'un canal de données.

5. Procédé selon l'une quelconque des revendications 1 à 3, dans lequel le premier moment comprend un moment précédent d'envoi des informations d'indication, la première durée comprend une durée précédente d'envoi des informations d'indication.

6. Procédé pour la réception d'un message, comprenant :
la réception (S302), par un terminal, d'informations d'indication, dans lequel les informations d'indication sont envoyées dans des informations de commande de liaison descendante ;
**caractérisé en ce que** les informations d'indication indiquent : des informations concernant une émission de données de liaison descendante d'un premier moment ou d'une première durée,
dans lequel les informations de commande de liaison descendante sont envoyées dans un canal de commande, et le procédé comprend en outre :
dans un cas où une sous-trame de début d'envoi du canal de commande est une sous-trame n, le premier moment étant une sous-trame n-k ; ou
dans un cas où une sous-trame de début du canal de commande est une sous-trame n, la première durée étant une durée débutant à partir d'une sous-trame n-k et ayant une longueur de m sous-trames ;
dans lequel à la fois k et m sont deux des nombres entiers positifs,
dans lequel les informations d'indication comprennent en outre au moins des informations parmi :
des informations de brouillage de données de liaison descendante ;
des informations d'inhibition de données de liaison descendante ;
des informations d'abandon de données de liaison descendante ;
des informations d'indication d'un mode de mappage de données de liaison descendante ; ou
des informations d'indication d'une ressource d'émission de données de liaison descendante.

7. Procédé selon la revendication 6, après la réception, par le terminal, des informations d'indication concernant l'émission de données, comprenant en outre :
la détermination, par le terminal, selon les informations d'indication, d'une stratégie de décodage pour un paquet de données actuellement reçu,
dans lequel la stratégie de décodage comprend l'un parmi :
la fusion du paquet de données actuellement reçu avec un paquet de données précédent, ou la fusion du paquet de données actuellement reçu avec des paquets de données d'un segment précédent, et le décodage d'un paquet de données fusionné ;
l'abandon d'un paquet de données précédent ou de paquets de données d'un segment précédent, et le décodage du paquet de données actuellement reçu ; ou
la fusion du paquet de données actuellement reçu avec une partie d'un paquet de données précédent, ou la fusion du paquet de données actuellement reçu avec une partie de paquets de données d'un segment précédent, et le décodage d'un paquet de données fusionné.

8. Procédé selon l'une quelconque des revendications 6 et 7, dans lequel le premier moment comprend un moment précédent d'envoi des informations d'indication, la première durée comprend une durée précédente d'envoi des informations d'indication.

9. Appareil d'envoi de messages, appliqué à une station de base, comprenant :
un module d'envoi (20), configuré pour envoyer des informations d'indication ; dans lequel les informations d'indication sont envoyées dans des informations de commande de liaison descendante,
**caractérisé en ce que** les informations d'indication indiquent : des informations concernant une émission de données de liaison descendante d'un premier moment ou d'une première durée,
dans lequel les informations de commande de liaison descendante sont envoyées dans un canal de commande, et le procédé comprend en outre :
dans un cas où une sous-trame de début d'envoi du canal de commande est une sous-trame n, le premier moment étant une sous-trame n-k ; ou
dans un cas où une sous-trame de début du canal de commande est une sous-trame n, la première durée étant une durée débutant à partir d'une sous-trame n-k et ayant une longueur de m sous-trames ;
dans lequel à la fois k et m sont deux des nombres entiers positifs,
dans lequel les informations d'indication comprennent en outre au moins des informations parmi :
des informations de brouillage de données de liaison descendante ;
des informations d'inhibition de données de liaison descendante ;
des informations d'abandon de données de liaison descendante ;
des informations d'indication d'un mode de mappage de données de liaison descendante ; ou
des informations d'indication d'une ressource d'émission de données de liaison descendante.

10. Appareil de réception de messages, appliqué à un terminal, comprenant :
un module de réception (40), qui est configuré pour recevoir des informations d'indication, dans lequel les informations d'indication sont envoyées dans des informations de commande de liaison descendante ;
**caractérisé en ce que** les informations d'indication indiquent : des informations concernant une émission de données de liaison descendante d'un premier moment ou d'une première durée d'envoi des informations d'indication,
dans lequel les informations de commande de liaison descendante sont envoyées dans un canal de commande, et le procédé comprend en outre :
dans un cas où une sous-trame de début d'envoi du canal de commande est une sous-trame n, le premier moment étant une sous-trame n-k ; ou
dans un cas où une sous-trame de début du canal de commande est une sous-trame n, la première durée étant une durée débutant à partir d'une sous-trame n-k et ayant une longueur de m sous-trames ;
dans lequel à la fois k et m sont deux des nombres entiers positifs,
dans lequel les informations d'indication comprennent en outre au moins des informations parmi :
des informations de brouillage de données de liaison descendante ;
des informations d'inhibition de données de liaison descendante ;
des informations d'abandon de données de liaison descendante ;
des informations d'indication d'un mode de mappage de données de liaison descendante ; ou
des informations d'indication d'une ressource d'émission de données de liaison descendante.

11. Support de stockage, ayant, stocké en son sein, un programme d'ordinateur, dans lequel le programme d'ordinateur, lorsqu'il est exécuté, est configuré pour réaliser le procédé selon l'une quelconque des revendications 1 à 5 ou le procédé selon l'une quelconque des revendications 6 à 8.
